# EUROPEAN PATENT SPECIFICATION

(11) **EP 1 262 224 B1**
(45) Date of publication and mention of the grant of the patent: **10.12.2003**
(21) Application number: 01830354.5
(22) Date of filing: 30.05.2001
(51) Int. Cl.: B01D 53/86, B01J 23/46, B01J 21/16

(54) **Process for the catalytic decomposition of nitrous oxide (N2O)**
Verfahren zur katalytischen Zersetzung von Distickstoffmonoxid (N2O)
Procédé pour la décomposition catalytique d'oxyde nitreux (N2O)

(43) Date of publication of application: 04.12.2002
(73) Proprietor: Radici Chimica Spa, 28100 Novara (IT)
(72) Inventor: Alini, Stefano, 27051 Cava Manara (Pavia) (IT); Bologna,Alberto, 26013 Crema (IT); Basile, Francesco, 88063 Catanzaro (IT); Montanari, Tania, 61035 Marotta (Pesaro Urbino) (IT); Vaccari, Angelo, 40127 Bologna (IT)
(74) Representative: Pistolesi, Roberto

(56) References cited:
- EP-A- 0 640 379
- EP-A- 0 725 038
- CENTI ET AL.: "Catalytic decomposition of N2O over noble and transition metal containing oxides and zeolites. Role of some variables on reactivity" CATALYSIS TODAY, vol. 35, 1997, pages 113-120, XP001022336
- P REZ-RAMIREZ ET AL.: "Structural promotion and stabilizing effect of Mg in the catalytic decomposition of nitrous oxide over calcined hydrotalcite-like compounds" APPLIED CATALYSIS B: ENVIRONMENTAL, vol. 23, 1999, pages 59-72, XP001022387
- ARMOR ET AL.: "Calcined hydrotalcites for the catalytic decomposition of N2O in simulated process streams" APPLIED CATALYSIS B: ENVIRONMENTAL, vol. 7, 1996, pages 397-406, XP001022382
- P REZ-RAMIREZ ET AL.: "High activity and stability of the Rh-free Co-based ex-hydrotalcite containing Pd in the catalytic decomposition of N2O" CATALYSIS LETTERS, vol. 60, 1999, pages 133-138, XP001022541

## Description

This invention describes an extremely efficient catalytic process for converting nitrous oxide (N₂O) into gaseous nitrogen and oxygen. The catalyst in the process, made up of mixed oxides is obtained from anionic clays of the hydrotalcite type; these materials are easy to prepare in the laboratory and on an industrial scale. After appropriate activation, the catalyst allows nitrous oxide to be destroyed with better results than those reported in the literature to date.

### Technical field of the invention

Nitrous oxide is not commonly held to be an atmospheric pollutant and until some decades ago it was not considered a gaseous contaminant as were other higher oxides of nitrogen (NOₓ) which were recognised as being dangerous for the environment

Studies which were carried out at the beginning of the 90s indicate that the concentration of nitrous oxide in the atmosphere could increase by around 0.2% per year and that this increase is due to the activities of Man (Thiemens and Trogler, Science, 251 (1991) 932).

Nitrous oxide is the main source of stratospheric NO and it is believed that it is involved in the destruction of the ozone layer; it has been further recognised as being a greenhouse effect producing gas. As nitrous oxide in the atmosphere has a half life of around 150 years, several studies have been carried out in order to identify the sources of this contaminant and way to limit its emission. The primary sources of emission of nitrous oxide are, in decreasing order, cultivation of land, combustion of the biomass, combustion of hydrocarbons for heating or propulsion and certain chemical processes. Emissions that can be reduced in the short term are those that originate from chemical processes and those that originate in heating plant, i.e. those emitted in definite places and thus upon which it is possible to take action by means of a purpose built scrubbing plant.

Recent studies have identified several processes contributing to raise levels of N₂O significantly in the earth's atmosphere and in particular; i) combustion in a fluid bed of waste waters and industrial water; ii) chemical processes in the production or use of nitric acid. The two areas differ in particular in compositions (concentrations of N₂O, presence of deactivating agents), temperature and volume of waste gas.

Examining the chemical processes it can be seen that nitrous oxide is a by-product of the production on monomers used in the production of polyamides 6.6 and 6.12. These polyamides are obtained by the polycondensation of a bicarboxilic acid with a diamine. The bicarboxilic acid most widely used is adipic acid, which in 2000 was produced in quantities of around 2.3x10⁶t. As calculated by Thiemens and Trogler for every mole of adipic acid formed a mole of nitrous oxide is formed from which it can be seen that 1.6x10¹⁰ moles of N₂O are emitted into the atmosphere and therefore 10% of the nitrous oxide into the atmosphere every year derives from this process alone.

The strategies adopted for eliminating nitrous oxide from waste gasses released from plant producing adipic acid have been divers, the main ones being: reutilization of nitrous oxide as an oxidant for the production of phenol, thermal destruction and catalytic decomposition. Of the two, decomposition processes the catalytic process shown here schematically: 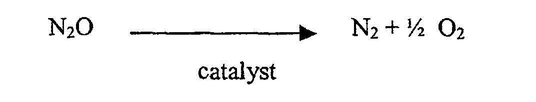 is currently more economically effective compared with thermal destruction though for the moment few catalytic systems exist which are truly effective on an industrial scale. The main classes of active catalyst for the destruction of nitrous oxide are:
a) noble metal based catalysts with various supports
b) metals inglobed in zeolytes
c) catalysts from anionic clays

Our attention turned to the class of catalysts from anionic clays which from the data available in the literature were shown to be economical, easy to prepare and above all stable at high temperatures though with certain problems of stability with some components of the gaseous mixture such as oxygen, water, organic compounds, NOₓ.

Anionic clays are a class of compound of relatively low cost and made up of mixed hydroxides with a layered structure, containing, in the spaces between the layers, anions of various types exchangeable or not exchangeable and molecules of water. To this class belong hydrotalcite, whose name is also used as a general term to refer to many other isomorphic or politype compounds (e.g. "hydrotalcite type"). The same compounds are also defined as layered double hydroxides.

To prepare these compounds many elements of the periodic table can be used and the preparation parameters can be varied to make it possible to obtain numerous advanced materials with specific properties. Many applications have thus been found for anionic clays of the hydrotalcite type among which the most interesting from an industrial point of view are adsorbents, catalyst precursors or supports, ion exchangers, flame retardants and/or stabilisers for polymers and in the medical - pharmaceutical field (as antiacids, antipeptics, and stabilisers or carriers for other drugs).

Products obtained through thermal decomposition of anionic clays show: large surface areas, basic features, peculiar properties which are attributable to synergetic effects linked to the presence of all the elements within the layers of the structure of the precursor. Mixed oxides obtained form thermal decomposition of anionic clays are thermally stable and are characterised by the small size of particles which by reduction generate small sized and thermally stable metallic crystallites.

In the literature many examples of the use of anionic clays as precursors of multi-compound and/or multi purpose catalysts are reported. There can be mentioned as the main examples: the preparation of catalysts for methanol synthesis and/or synthesis of methanol and higher alcohol from synthesis gas; basic catalysts for polymerisation and/or polycondensation reactions (Mg/Al); for steam reforming of methane and other hydrocarbons (Ni/Mg); as photo-catalysts and oxidation catalysts (pillared or intercalated anionic clays); the destruction of nitrous oxide or to support active phases (e.g. CeO₂, TiCl₄, VCl_{4,} etc.).

The structure, the properties, the methods of synthesis and the industrial applications of anionic clays of hydrotalcite type are fully and exhaustively illustrated in the following publications: F. Cavani, F. Trifirò, A. Vaccari, Catalysis Today, 11, 173 (1991); F. Trifirò e A. Vaccari, in Comprehensive Supramolecular Chemistry, J.L. Atwood, J.E.D. Davies e D.D.MacNicol (Editors), Vol.7, Pergamon, Oxford, 1996, p 251; W.T. Riechle, Chemtech 16, 58 (1986); A. de Roy, C. Forano, K. El Malki e J. P. Besse, in "Expanded Clays and other Microporous Solids", M.L. Occelli e H. E. Robson (Editors), Vol.2, Reinhold, New York, 1992, p 108.

Many of the results reported in the literature and which refer to the use of this type of catalyst in the decomposition of nitrous oxide do not report reassuring data concerning the stability of the catalyst used. Almost all the literature further reports experiments conducted with concentrations of nitrous oxide of around 1000 ppm. Industrial applications, in particular for the treatment of off-gas of adipic acid plant or in general plant with a high concentration of nitrous oxide in effluent gasses, requires a catalyst able to reduce the concentrations of N₂O by 10-40% (in volume) below 500 ppm.

To go into further detail, the results shown in tables 1,2,3, of US patent 5,407,652 which are identical to those of US patent 5,472,677, show very good conversions of nitrous oxide but besides working at low concentrations of nitrous oxide, they describe a process in which the nitrous oxide is fed to the catalyst in a (artificial) mixture with helium and thus in conditions which are a long way from being a waste industrial gas. Furthermore, in the above patents certain catalysts demonstrate poor results (see runs 3-7,11,13 and 18 of US 5,407,652) and others excellent results (runs 10 and 17 of the same patent). In the later US patent 5,472,677 an interpretation of this phenomenon is given explaining it away by the presence of a residual quantity of metal alkalis and earth-alkalis, not completely eliminated in the washing phase with distilled water. However disagreeing with this latter patent we have found that the activity of the catalyst is not influenced by residual alkalinity. Indeed, carrying out careful washing, sufficient to obtain a residual alkali content expressed as oxide of 0.1%, the catalyst does not lose activity.

G. Centi et al., Catalysis Today, 35 (1997) 113-120 describes the use of rhodium supported on magnesium and aluminium oxide in the reduction of N₂O. In more detail, rhodium (3+) is supported on the surface of an oxide of magnesium and aluminium obtained by calcination at 600°C of the corresponding hydrotalcite; the compound thus obtained undergoes hydrogenation with a consequent reduction of rhodium to metallic rhodium, and is then placed in contact with a flow of N₂O at 1% in helium, with a consequent decomposition of the N₂O. This document however reports that the presence of impurities in the gaseous flow containing N₂O (such as O₂, NO and H₂O for example) significantly prejudices the decomposition of the N₂O itself; the document further indicates that the decomposition of N₂O is not particularly effective in the event of the rhodium being exchanged in a zeolite type structure.

Finally, in the European Patent Application EP-725038 the use of hydrotalcite type catalysts that have undergone prior calcination and reduction in the partial reduction of methane is described.

### Description of the invention

It was now surprising to discover that a compound with a layered structure of the hydrotalcite type, mainly rhodium, magnesium and aluminium based, and in which the rhodium is held within the structure itself, can be used to good effect as a precursor of a catalyst to be used for destroying nitrous oxide. The hydrotalcitic composition of this is shown by the formula (1) shown here below

[Mⁿ⁺ ₐ Mg²⁺ _{b}Al³⁺ _{c}(OH⁻)₂]^{z+}.(A^{x-})_{z/x} m H₂O (1)

where:
M = Rh, Ru, Pt, Pd, Ir or a mixture of these
n= metal charge equal to 2,3or 4 depending on the type of metal
0<a≤0,5
0≤b≤0,9
0≤c≤0,5
a+b+c=1
m= zero or a positive integer
z = total electrical charge of the cationic component

A= may be a hydroxyl, any organic or inorganic anion, an iso- or heteropolyanion, an anionic or organometallic complex with a charge x; for preference A= carbonate.

The preparation of the above formula structure (1) may be carried out in the same manner as described in the above-cited literature. In particular, it may be prepared utilising a water solution containing the salts, preferably nitrates, of Mⁿ⁺, Mg²⁺ and Al³⁺. This solution is added with strong stirring and at a temperature comprised within the range of 30 to 90°C, and preferably from 50 to 70°C to a solution of alkali metal carbonate or hydrogencarbonate, care being taken to maintain pH at a constant value within the range of 7 to 12, preferably 8 to11, during the whole precipitation, by adding a basic solution, preferably soda 2 M, with consequent precipitation of the hydroxide (or rather the hydrotalcite).

In the preferred form of the invention the three metals are used in atomic ratios equal to 0.005-0.02 for rhodium, 0.5-0.9 for magnesium and 0.1 and 0.5 for aluminium; in the most preferred form the atomic ratios Rh³⁺/Mg²⁺/Al³⁺ are 0.01/0.71/0.28, with a consequent precipitation of a hydrotalcite with a formula (1bis) shown here below:

[Rh³⁺ _{0.01}Mg²⁺ _{0,71}Al³⁺ _{0,28}(OH⁻)₂)]^{z+}(CO₃²⁻)_{z/2} m H₂O (1bis)

where m and z have the meaning indicated previously.

The crystalline precipitate thus formed, or rather the structure of formula (1) or (1bis), is separated and washed with distilled water to an alkaline content expressed as sodium oxide lower than 0.1%; the precipitate is then dried at a temperature within the range of 80 to150°C, preferably at 110°C for about 24 hours.

The crystalline precipitate thus obtained is then calcined at a temperature within the range of 350 to 750° C, preferably in a muffle and in an atmosphere of air or nitrogen.

The calcination temperature, or rather the temperature required to decompose the monovalent, bivalent or trivalent anion A to form a volatile gas, may influence the activity of the catalyst considerably as it determines the crystalline structure of this; the influence is however different for hydrotalcites which contain different metals. Samples of hydrotalcites which contain in prevalence Mg and Al, for calcination up to a temperature of 750°C generate solid solutions of mixed oxides (with a structure similar to rock salt) with a defective structure (oxygen vacancy). At higher temperatures the structure rearranges forming a phase of MgO and a phase of the spinel type with a decrease in the number of defects and thus with a more regular structure and thermally more stable but with a consequent decrease of surface area. Samples containing in prevalence Co and Al form the spinel type phase already at the temperature of decomposition of the hydrotalcite (400°C). Catalysts with a defective mixed oxide structure have been shown to be more active in the decomposition of nitrous oxide as they have a greater surface area. Furthermore, the presence of two phases of type MgO and MgAl₂O₄ in the sample calcined at temperatures above 750°C brings about a non homogeneous distribution of Rh over the two phases which has a negative influence of the dispersion of Rh obtained following the process of reduction.

In order to obtain an industrial catalyst it is however necessary to achieve the right compromise between activity (meaning light off temperature and capacity for decomposition of nitrous oxide) and stability (mainly from the point of view of heating as the reaction is strongly exothermic) both of the catalyst and the active species of Rh. Thus the temperature of optimal calcination is influenced by the temperature at which the process is conducted and must be chosen to avoid any rearrangement of the structure of the catalyst in the reactor if the operating temperature is higher; for the purposes of this invention, the optimum temperature of calcination is within the range of 600 to 700°C, preferably 650°C, and thus generates a so called mixed oxide structure.

Subsequently, the calcinated material is activated by reduction treatment in a hydrogen and nitrogen or helium atmosphere at a temperature within the range of 350 to 1000°C, preferably at a temperature within the range of 500 to 800°C. Hydrogen is normally used in concentrations within the range of 0.5 to 100%, preferably within the range of 50% to 80%; reduction takes place at a pressure of from 0.5 to 30 atm, preferably at from 1 to 5 atm, and for a period of time between 0.2 and 24 h preferably between 1 and 10 h.

To our surprise we in fact noted that decomposition of nitrous oxide is particularly effective where the calcined catalyst had been previously reduced in a hydrogen or hydrogen and nitrogen (or helium) current. For example, as can been seen from tables 1 and 2, the catalyst calcined at 650°C and not reduced, has a light off temperature noticeably higher than reduced catalyst. Catalyst which has undergone reduction treatment also shows an activity and stability greater than unreduced catalyst.

Treatment with hydrogen indeed allows transformation of Rh³⁺ which is present in the mixed oxides obtained by calcination and more generally the metal Mⁿ⁺, in metallic rhodium which interacts strongly with the matrix in which it is contained (whilst aluminium and magnesium remain in a cationic form). The material thus obtained presents a surprising degree of stability in the oxide state of metal (0) in conditions of flow of an oxidising medium; inertia towards re-oxidisation is probably due to the particular interaction between the matrix made up of mixed oxides, in which the metal is inserted prior to reduction treatment, and the metal dispersed on the surface after reduction.

The presence of this surprising interaction between the structure and noble metal, rhodium in particular, is specific to these materials and is not obtainable for example reducing the noble metal after its impregnation on to mixed oxides Mg/Al obtained from hydrotalcite precursors. We have therefore attributed this property to two specific factors; 1) the presence of inert oxides alongside the reduced noble metal so that the matrix cannot be reduced or oxidised under process operating conditions and thus this does not favour the change in the state of oxidation of the noble metal; 2) a strong interaction on the part of the noble metal with the defective structure of the mixed oxide, which tends to be basic, which enriches the metallic centre with electrons, This second effect facilitates the break up of the N-O bond in the molecule of nitrous oxide as it makes a higher electronic charge available on the metal which is given back to the molecule anti-bond orbital of the nitrous oxide. The stability of these catalysts renders them of great interest for use in reaction of N₂O decomposition in processes containing a high concentration of N₂O in wastes. Indeed this reaction envisages the formation of large quantities of oxygen above that present in the reagent flows and this requires the use of materials that are stable under oxidant reaction conditions.

The size of the particles of metallic rhodium which form by reduction is significantly influenced by the structure of the sample, the temperature of calcination and the presence of metallic ions which come together to make up the structure of the material. Although the subsequent treatment with N₂O causes a partial re-oxidisation of the rhodium to species RhOₓ, on the surface, different from the oxide species present after calcination, this allows the material to maintain high catalytic activity in the decomposition of N₂O.

A first aspect of this invention is therefore the use of a system of catalysis obtained by calcination and subsequent reduction of a hydrotalcite structure of formula (1), in the processes of decomposition of nitrous oxide.

The use of the above system of catalysis in processes of decomposition of nitrous oxide in fact allows the high conversion to be obtained, permits the treatment of plant off-gas without prior dilution treatment, whilst maintaining the activity of the system of catalysis itself unaltered for an extended period of time. The high degree of thermal stability of the catalyst allows support of the exothermia of the reaction and the taking advantage of this latter to self maintain the reaction on the catalyst bed. The stability tests here attached were carried out utilising gasses from an adipic acid production plant; the catalyst showed itself to be stable even in the presence of humidity and other components present in the gaseous mixed fed in, such as CO₂, organic substances, NOₓ.

The breakdown of nitrous oxide according to this invention can be used to remove nitrous oxide from any gaseous mixture containing it and is active even in the presence of appreciable quantities of higher oxides of nitrogen (NOₓ), water and oxygen in the gaseous mixture.

The process according to this invention works at temperatures within the range of 100 to 900°C and, preferably, within the range of 300 to 600 °C and at pressures within the range of 0.1 to 100 atm preferably within the range of 0.1 and 10 atm allowing reduction of the concentrations of N₂O in waste gases containing from 10 to 40% in volume of N₂O down to levels below 500 ppm and, as can be appreciated from the examples attached, levels below 200 ppm. The process in question may be carried out in fixed bed reactors and with a gas hourly spatial velocity within the range of 1000 to 1500000h⁻¹, preferably of from 5000 and 500000h⁻¹.

A second purpose of this invention is linked to the possibility of maintaining the exothermia of the reaction under control, mixing the catalyst with an inert substrate (such as mixed oxides obtained from hydrotalcite, α-alumina or silicon carbide for example). As shown in the attached examples, the dissipation of heat through these inert substances indeed allows the phenomenon of hot spots to be limited and thus lengthen the life of the catalyst as a lower temperature renders the process of re-oxidisation of Rh very slow, and ensures that the catalyst will perform for long periods.

The lowest temperatures of light off and operation described for the catalysts in this invention, combined with enhanced control of exothermia obtained through inert substance additives, represents a significant advantage as energy needs are reduced and operating conditions are less demanding and stressing for the equipment and the catalyst.

It must be pointed out finally how the catalytic system normally used in the process of decomposing nitrous oxide are habitually prone to a drastic deactivation due to surface oxidisation of the noble metal and in particular, of metallic rhodium.

As can be appreciated from the examples attached, the catalytic systems by calcination and subsequent hydrogenation of a hydrotalcite structure of formula (I) may be regenerated successfully by reduction in a flow of hydrogen; it has indeed been observed that treatment of these systems of catalysis with a mixture of nitrogen (or helium) and hydrogen is able to reinstate catalytic activity fully.

This process consists in bringing the system of catalysis used previously in a process of decomposition of nitrous oxide into contact with a mixture of nitrogen (or helium) and hydrogen in concentrations of 0.5 and 100%, preferably within the range of 1 to 50% for a period of time within the range of 0.2 to 24 h, preferably within the range of 1 to 10 h.

The process of regeneration in question is carried out at a temperature within the range of 100 to 900°C, preferably within the range of 300 to 800°C and at a pressures within the range of 0.5 to 30 atm, preferably within the range of 1 to 5 atm.

This and other aspects of the invention will appear evident from the following examples that have the purpose of illustrating the invention but do not intend to limit it in any way.

### Example 1

### Synthesis of mixed oxides by means of a compound of hydrotalcitic type containing Rh/Mg/Al = 5/71/24 (atomic ratio %)

In a beaker 13.35 p by weight of Rh(NO₃)₃ x XH₂O (36% Rh by weight), 170 p by weight of Mg (NO₃)₂x 6H₂O and 84.1 p by weight of Al(NO₃)₃ x 9H₂O in 1000 p by weight of distilled water are dissolved at a temperature of 60°C (solution A).

A second solution is prepared at a temperature of 60°C containing 127.4 p by weight of Na₂CO₃ and 1500 p by weight of distilled water. This is acidified through the addition of concentrated HNO₃ in order to reach pH = 10 (solution B).

Under vigorous stirring and at a temperature of 60°C solution A is added to solution B so as to complete the operation in around 30 minutes. The pH is kept at 10 during precipitation by adding NaOH 2 M.

Stirring is continued for 30 minutes whilst maintaining a constant temperature of 60°C. The precipitate is filtered and washed with distilled water at a temperature of 60°C until nitrates are completely eliminated and until the concentration of sodium, expressed as Na₂O falls below 0.1% by weight (referred to the sample oven dried at 100°C).

The product thus obtained is dried for 24 hours at 100°C and calcined at 650°C for 15 hours. Then it is cooled and a catalyst of the following composition is obtained:

Rh_{0.05}Mg₀₇₁Al_{0.24}O_{1.145}

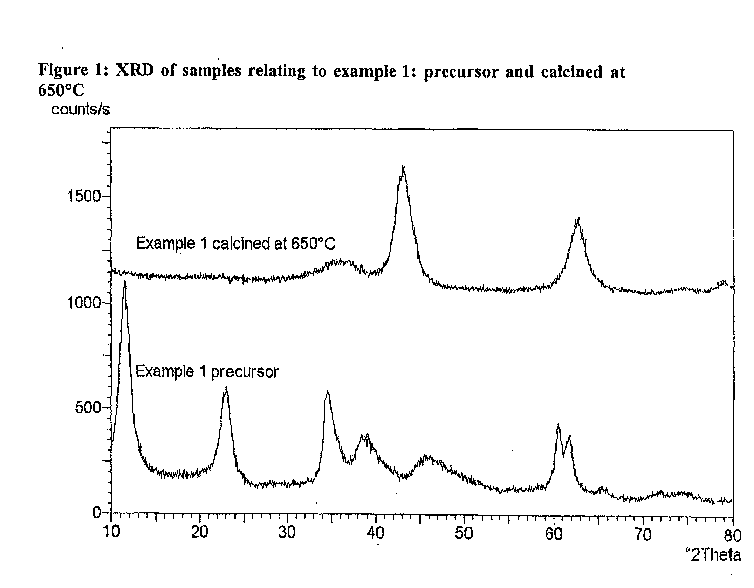

The precursor (product dried at 100°C) and the catalyst after calcination at 650°C are characterised by powder ray diffractometry (fig.1). The precursor shows a single phase corresponding to a structure of hydrotalcite type. The catalyst calcined at 650°C shows a mixed oxide phase (rock salt type) containing Rh, Mg and Al.

### Example 2

### Synthesis of mixed oxides by means of a hydrotalcite type compound containing Rh/Mg/Al =1/71/28 (atomic ratio %)

In a beaker 3.240 p by weight Rh(NO₃)₃ x XH₂O (36% by weight), 206,1 p by weight of Mg (NO₃)₂ x 6H₂O and 118.9 by weight of Al(NO₃)₃ x 9H₂O in 1000 p by weight of distilled water are dissolved at a temperature of 60°C (solution A).

A second solution is prepared at temperature of 60°C containing 127.4 p by weight of Na₂CO₃ and 1500 p by weight of distilled water. This is acidified through the addition of concentrated HNO₃ in order to reach pH = 10 (solution B).

Under vigorous stirring and at temperature of 60°C solution A is added to solution B so as to complete the operation in around 30 minutes. The pH is kept at 10 during precipitation by adding NaOH 2 M.

Stirring is continued for 30 minutes whilst maintaining a constant temperature of 60°C. The precipitate is filtered and washed with distilled water at a temperature of 60°C until nitrates are completely eliminated and until the concentration of sodium, expressed as Na₂O falls below 0.1 % by weight (referred to the sample oven dried at 100°C).

The product thus obtained is dried for 24 hours at 100°C and calcined at 650°C for 15 hours. Then it is cooled and a catalyst of the following composition is obtained:

Rh_{0.01}Mg_{0.71}Al_{0.28}O_{1.145}

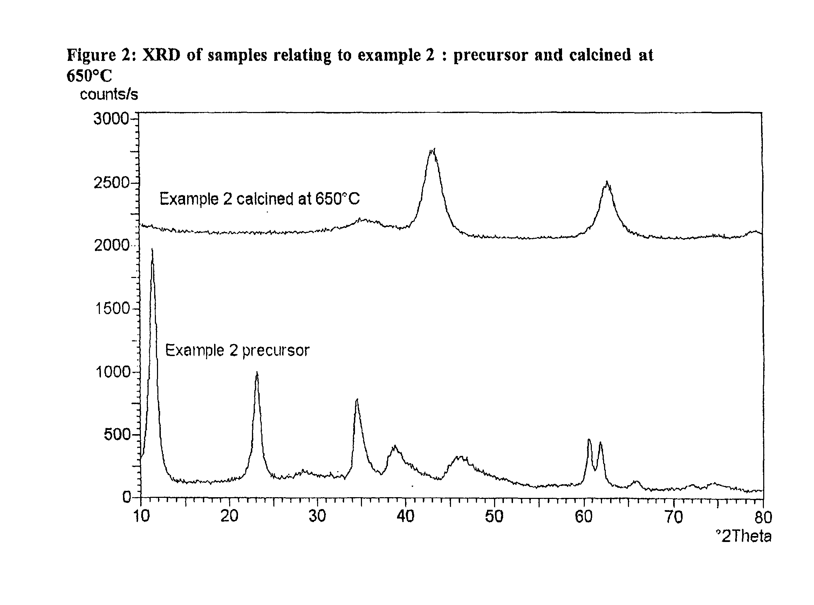

The precursor (product dried at 100°C) and the catalyst after calcination at 650°C are characterised by powder X ray diffractometry (fig.2). The precursor shows a single phase corresponding to a structure of hydrotalcite type. The catalyst calcined at 650°C shows a mixed oxide phase (rock salt type) containing Rh, Mg and Al.

### Example 3

### Synthesis of mixed oxides by means of a hydrotalcite type compound containing Rh/Mg/Al = 0.5/17/28.5 (atomic ratio %)

In a beaker 1.632 p by weight of Rh(NO₃)₃ x XH₂O (36% by weight), 207,9 p by weight of Mg (NO₃)₂ x 6H₂O and 122.1 p by weight of Al(NO₃)₃ x 9H₂O in 1000 p by weight of distilled water are dissolved at temperature of 60°C (solution A).

A second solution is prepared at temperature of 60°C containing 127.4 p by weight of Na₂CO₃ and 1500 p by weight of distilled water. This is acidified through the addition of concentrated HNO₃ in order to reach pH = 10 (solution B).

Under vigorous stirring and at temperature of 60°C solution A is added to solution B so as to complete the operation in around 30 minutes. The pH is kept at 10 during precipitation by adding NaOH 2 M.

Stirring is continued for 30 minutes whilst maintaining a constant temperature of 60°C. The precipitate is filtered and washed with distilled water at a temperature of 60°C until nitrates are completely eliminated and until the concentration of sodium, expressed as Na₂O falls below 0.1% by weight (referred to the sample oven dried at 100°C).

The product thus obtained is dried for 24 hours at 100°C and calcined at 650°C for 15 hours. Then it is cooled and a catalyst of the following composition is obtained:

Rh_{0.005}Mg_{0.71}Al_{0.285}O_{1.145}

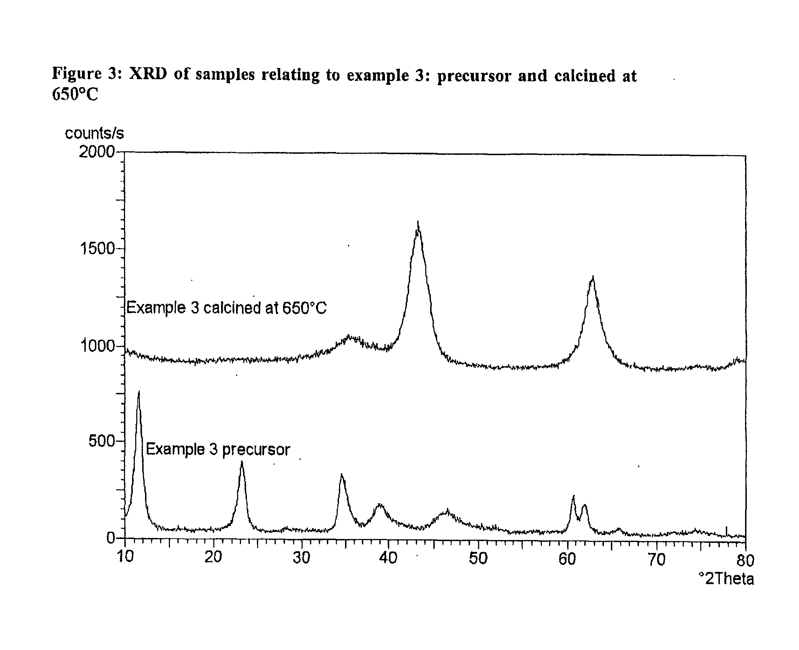

The precursor (product dried at 100°C) and the catalyst after calcination at 650°C are characterised by powder X ray diffractometry (fig.3). The precursor shows a single phase corresponding to a hydrotalcite type structure. The catalyst calcined at 650°C shows an mixed oxide phase (rock salt type) containing Rh, Mg and Al.

### Example 4

### Synthesis of mixed oxides by means of a hydrotalcite type compound containing Rh/Co/Al = 0.5/74.5/25 (atomic ratio %)

In a beaker 1.04 p by weight of Rh(NO₃)₃ x XH₂O (36% by weight), 156.7 p by weight of Co(NO₃)₂ x 6H₂O and 67.9 p by weight of Al(NO₃)₃ x 9H₂O in 1000 p by weight of distilled water are dissolved at a temperature of 60°C (solution A).

A second solution is prepared at a temperature of 60°C containing 127.4 p by weight of Na₂CO₃ and 1500 p by weight of distilled water. This is acidified through the addition of concentrated HNO₃ in order to reach pH = 10 (solution B).

Under vigorous stirring and at a temperature of 60°C solution A is added to solution B so as to complete the operation in around 30 minutes. The pH is kept at 10 during precipitation by adding NaOH 2 M.

Stirring is continued for 30 minutes whilst maintaining a constant temperature of 60°C. The precipitate is filtered and washed with distilled water at a temperature of 60°C until nitrates are completely eliminated and until the concentration of sodium, expressed as Na₂O falls below 0.1% by weight (referred to the sample oven dried at 100°C).

The product thus obtained is dried for 24 hours at 100°C and calcined at 650°C for 15 hours. Then it is cooled and a catalyst of the following composition is obtained:

Co_{0.745}Rh_{0.005}Al_{0.25}O_{1.334}

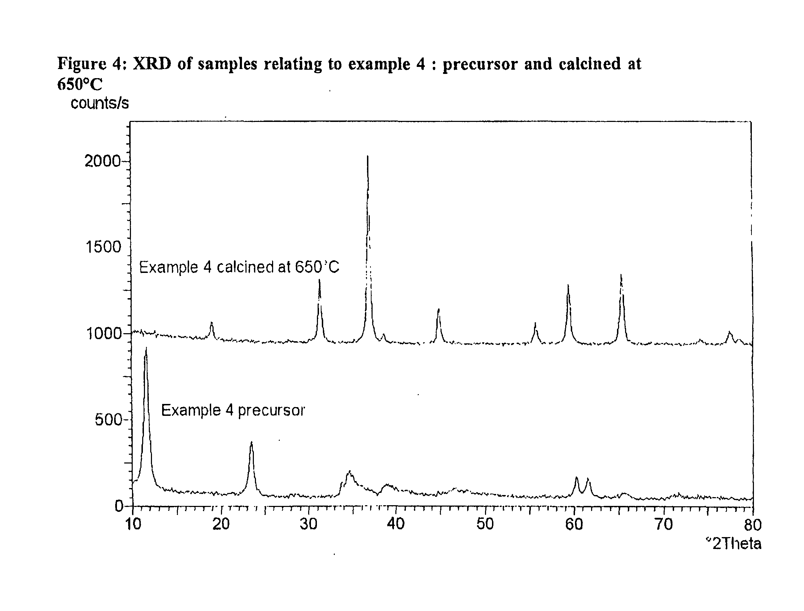

The precursor (product dried at 100°C) and the catalyst after calcination at 650°C are characterised by powder X ray diffractometry (fig.4). The precursor shows a single phase corresponding to a structure of hydrotalcite type. The catalyst calcined at 650°C shows an mixed oxide phase (rock salt type) containing Rh, Co and Al.

### Example 5

### Synthesis of mixed oxides by means of a hydrotalcite type compound containing Rh/Mg/Al = 0,5/71/28.5 (atomic ratio %)

Precipitation of the precursor as in example 3 except that the product thus obtained is dried for 24 hours at 100°C and calcined at 900°C for 15 hours. Then it is cooled and a catalyst of the following composition is obtained.

Rh_{0.005}Mg_{0.71}Al_{0.285}O_{1.145}

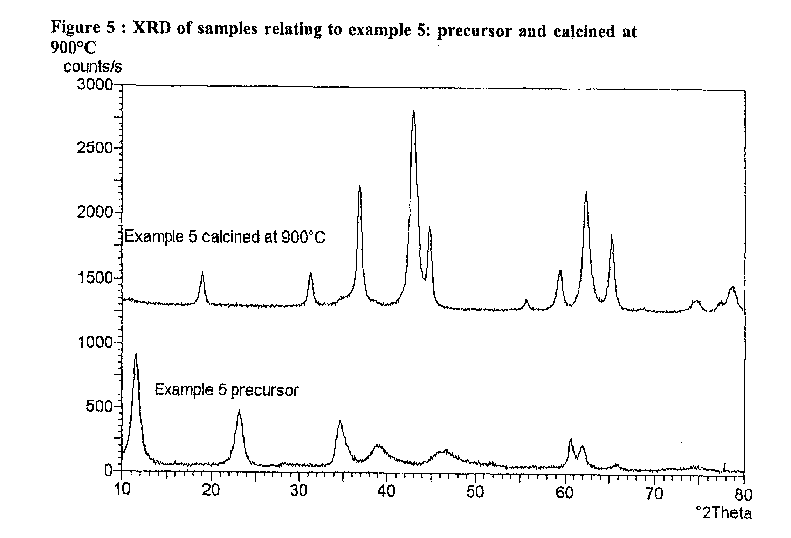

The precursor (product dried at 100°C) and the catalyst after calcination at 650°C are characterised by powder X ray diffractometry (fig.3) The precursor shows a single phase a structure of hydrotalcite type. The catalyst calcined at 900°C shows a MgO spinel type phase containing Rh, Mg and Al (see fig. 5).

### Decomposition of nitrous oxide on catalysts based on mixed oxides taken from anionic clays

The following general procedure has been used to destroy nitrous oxide in gaseous nitrogen and oxygen by catalysis using catalysts described in the following invention.

The reactor was a tube in stainless steel AISI 316 with an internal diameter of 8 mm and 700 mm high. The catalyst was placed inside the tube at about its halfway point. The charge of catalyst generally used was around 0.35 ml. The reactor was placed in a tubular oven that was able to operate at 100 to 1100°C. The temperature of the oven was adjustable by means of a control panel. A thermocouple placed inside the reactor in contact with the catalyst provided the actual temperature of the catalyst bed.

The concentration of nitrous oxide was within the range of 10 to 30%. The concentration of oxygen was around 8-12%, water was present up to a concentration of 2%, the concentration of CO₂ reached 2-3%, the rest being nitrogen. The gaseous mixture came from the off-gasses of an adipic acid plant.

Analysis of the gas was carried out with a gas chromatograph with a thermo-conductibility detector. The system of sampling was by means of pneumatic valves so that the analyses could be reproduced better. The nitrous oxide and carbon dioxide separation column from the nitrogen/oxygen mixture was a Poropack Q 160-180 µm (80/100 mesh) of length, 1.83 m (6 ft), e.d. 3.175 mm (1/8").

For the separation of oxygen from nitrogen, there was inserted in series with the first column a molecular sieve column 13X 250-355 µm (45/60 mesh) of length, 1.219 m (4 ft), e.d. 3.175 mm (1/8"). The temperature of the oven of the gas chromatograph was programmed from 40 to 155°C and the rate of the carrier was 30 cc/min.

The experiments in decomposition of nitrous oxide were conducted with a gas flow of around 20L/h and a gas hourly space velocities (GHSV) within the range of 5000 to 200000 h⁻¹. The reaction was studied in a range of temperatures from 300 to 700°C.

### Activity of the catalyst and effect of the reduction

### Example 6

The catalyst prepared in accordance with example 1 (0.3g) was introduced into the tubular reactor and reduced in hydrogen and nitrogen current (50%) at a temperature of 750°C. Subsequently it was heated to a temperature of 350°C in a flow of nitrogen (20 l/h). Once the desired temperature had been reached the off-gasses of the plant were directed to the catalyst after elimination of H₂O and maintaining the gas flow at 20 l/h, which corresponds to a GHSV of around 64500 h⁻¹. The conversion was monitored raising the temperature by 50°C at a time until complete destruction of nitrous oxide was achieved. At a temperature of 400°C analysis of gasses exiting from the reactor confirm practically complete destruction of nitrous oxide (<200ppm). Conversion > 99.8%. The results reported in table 1 compare the behaviour of the catalyst (as described in this example) with the behaviour of the same catalyst not reduced (example7).

### Example 7 (for comparison)

The catalyst prepared in accordance with example 1 (0.3g) was introduced into the tubular reactor and heated to a temperature of 350°C in a flow of nitrogen (20 l/h) without pre-reduction. Once the desired temperature had been reached the off-gasses of the plant were directed to the catalyst after elimination of H₂O and maintaining the gas flow at 20 l/h, which corresponds to a GHSV of around 64500 h⁻¹. The conversion was monitored raising the temperature by 50°C at a time until a temperature of 550°C was reached. At a temperature of 450°C analysis of gasses exiting from the reactor confirm insufficient destruction of nitrous oxide. Conversion < 50%. The results reported in table 1 compare the behaviour of the catalyst (as described in this example) with the behaviour of the same catalyst reduced (example 6).

**Table 1**

| | conversion (%) | |
|---|---|---|
| T (°C) | Example 6 | Example 7 |
| 300 | 99 | 5 |
| 350 | 99.6 | 6 |
| 400 | 100 | 14 |
| 450 | 100 | 41 |
| 500 | 100 | 70 |
| 550 | 100 | 88 |

### Example 8

The catalyst prepared in accordance with example 2 (0.3g) was introduced into the tubular reactor and reduced in hydrogen and nitrogen current (50%) at a temperature of 750°C. Subsequently it was heated to a temperature of 350°C in a flow of nitrogen (20 l/h). Once the desired temperature had been reached the off-gasses of the plant were directed to the catalyst after elimination of H₂O and maintaining the gas flow at 20 l/h, which corresponds to a GHSV of around 64500 h⁻¹. The conversion was monitored raising the temperature by 50°C at a time until complete destruction of nitrous oxide was achieved. At a temperature of 400°C analysis of gasses exiting from the reactor confirm practically complete destruction of nitrous oxide (<200ppm). Conversion = 99.8%. The results reported in table 2 compare the behaviour of the catalyst (as described in this example) with the behaviour of the same catalyst not reduced (example 9).

### Example 9 (for comparison)

The catalyst prepared in accordance with example 2 (0.3g) was introduced into the tubular reactor and heated to a temperature of 350°C in a flow of nitrogen (20 l/h) without pre-reduction. Once the desired temperature had been reached the off-gasses of the plant were directed to the catalyst after elimination of H₂O and maintaining the gas flow at 20 l/h, which corresponds to a GHSV of around 64500 h⁻¹. The conversion was monitored raising the temperature by 50°C at a time until a temperature of 450°C was reached. At a temperature of 450°C analysis of gasses exiting from the reactor confirm insufficient destruction of nitrous oxide. Conversion < 40%. The results reported in table 2 compare the behaviour of the catalyst (as described in this example) with the behaviour of the same catalyst reduced (example 8).

**Table 2**

| | conversion (%) | |
|---|---|---|
| T (°C) | Example 8 | Example 9 |
| 300 | 70.0 | 3.4 |
| 350 | 96.6 | 3.7 |
| 400 | 99.8 | 9.2 |
| 450 | >99.8 | 35.1 |

### Example 10

The catalyst prepared in accordance with example 4 (0.3g), being as described in US patents 5,472,677 and 5,407,652, was introduced into the tubular reactor and reduced in hydrogen and oxygen current (50%) at a temperature of 750°C. Subsequently it was heated to a temperature of 350°C in a flow of nitrogen (20 l/h). Once the desired temperature had been reached the off-gasses of the plant were directed to the catalyst after elimination of H₂O and maintaining the gas flow at 20L/h, which corresponds to a GHSV of around 64500 h⁻¹. The conversion was monitored raising the temperature by 50°C at a time until a temperature of 500°C and a conversion of nitrous oxide of around 77% was reached.

### Example 11

The catalyst prepared in accordance with example 3 (0.3g) was introduced into the tubular reactor and heated to a temperature of 350°C in a flow of nitrogen (20 l/h) without pre-reduction. Once the desired temperature had been reached the off-gasses of the plant were directed to the catalyst after elimination of H₂O and maintaining the gas flow at 20 l/h, which corresponds to a GHSV of around 64500 h⁻¹. The conversion was monitored raising the temperature by 50°C at a time until a temperature of 450°C was reached. At a temperature of 450°C analysis of gasses exiting from the reactor confirm partial destruction of nitrous oxide. Conversion < 60%. The results reported in table 3 compare the behaviour of the catalyst (as described in this example) with the behaviour of the same catalyst reduced (example 10).

**Table 3**

| | conversion (%) | |
|---|---|---|
| T (°C) | Example 10 | Example 11 |
| 300 | 8 | 3.9 |
| 350 | 10.8 | 8.5 |
| 400 | 24 | 11.8 |
| 450 | 54 | 56.3 |
| 500 | 76.8 | 77 |
| 550 | 95.9 | - |
| 600 | 99.3 | - |
| 650 | 99.9 | - |

As can be seen from these results, reduction of the catalyst in hydrogen current produces no improvement in the activity of decomposition of nitrous oxide. This fact can be explained, as the catalyst produced by a mixture of Rh/Co/Al 0.5/74,5/25 containing cobalt, tends to form a spinel structure at calcination temperatures far below those of a mixture Rh/Mg/Al. This confirms therefore that the structure of mixed oxides we obtained allows the obtaining of a catalyst with a different structure which is more active at low operating temperatures too, through a reduction in hydrogen current phase. Furthermore this structure, thanks to the fact of being able to work at low temperatures, is maintained and the catalyst can always be regenerated, using a reduction passage in hydrogen current as shown in example 21 below.

### Effect of H₂O and the temperature of calcination

### Example 12

The catalyst prepared in accordance with example 2 (0.3g) was introduced into the tubular reactor and reduced in hydrogen and nitrogen current (50%) at a temperature of 750°C. Subsequently it was heated to a temperature of 350°C in a flow of nitrogen (20 l/h). Once the desired temperature had been reached the off-gasses of the plant were directed to the catalyst after elimination of H₂O and maintaining the gas flow at 20 l/h, which corresponds to a GHSV of around 64500 h⁻¹. The conversion was monitored raising the temperature by 50°C at a time until complete destruction of nitrous oxide was achieved. At a temperature of 450°C analysis of gasses exiting from the reactor confirm practically complete destruction of nitrous oxide (<200ppm). Conversion > 99.8%. The results reported in table 4 compare the behaviour of the catalyst (as described in this example) with the behaviour of the same catalyst in the presence of H₂O.

### Example 13

The catalyst prepared in accordance with example 2 (0,3g) was introduced into the tubular reactor and reduced in hydrogen and nitrogen current (50%) at a temperature of 750°C. Subsequently it was heated to a temperature of 350°C in a flow of nitrogen (20 l/h). Once the desired temperature had been reached the off-gases of the plant containing 2% H₂O were directed to the catalyst and maintaining the gas flow at 20 l/h, which corresponds to a GHSV of around 64500 h⁻¹. The conversion was monitored raising the temperature by 50°C at a time until complete destruction of nitrous oxide was achieved. At a temperature of 500°C analysis of gasses exiting from the reactor confirm practically complete destruction of nitrous oxide (<200ppm). Conversion = 99.8%. The results reported in table 4 compare the behaviour of the catalyst (as described in this example) with the behaviour of the catalyst in the absence of H₂O.

### Example 14

The catalyst prepared in accordance with example 3 (0,3g) was introduced into the tubular reactor and reduced in hydrogen and nitrogen current (50%) at a temperature of 750°C. Subsequently it was heated to a temperature of 350°C in a flow of nitrogen (20 l/h). Once the desired temperature had been reached the off-gasses of the plant containing 2% H₂O were directed to the catalyst and maintaining the gas flow at 20 l/h, which corresponds to a GHSV of around 64500 h⁻¹. The conversion was monitored raising the temperature by 50°C at a time until a temperature of 500°C was reached. At a temperature of 500°C analysis of gasses exiting from the reactor confirm incomplete destruction of nitrous oxide (>1500ppm). Conversion = 98.4%. The results reported in table 4 compare the behaviour of the catalyst (as described in this example) with the behaviour of the catalyst prepared in accordance with example 2 and in the presence of H₂O.

**Table 4**

| | conversion (%) | | |
|---|---|---|---|
| T (°C) | Example 12 | Example 13 | Example 14 |
| 300 | 70 | 5.9 | 6.1 |
| 350 | 94.4 | 10.9 | 7.6 |
| 400 | 99.7 | 56.8 | 24.8 |
| 450 | > 99.8 | 95.5 | 90.6 |
| 500 | > 99.8 | > 99.8 | 98.4 |

### Regeneration

### Example 15

The catalyst prepared in accordance with example 2 (0,3g) was introduced into the tubular reactor and reduced in hydrogen and nitrogen current (50%) at a temperature of 750°C. Subsequently it was heated to a temperature of 350°C in a flow of nitrogen (20 l/h). Once the desired temperature had been reached it was subjected to a rapid deactivating treatment, the off-gasses of the plant containing 2% H₂O and 10% oxygen were directed to the catalyst maintaining the gas flow at 80 l/h, which corresponds to a GHSV of around 258000 h⁻¹. The conversion was monitored raising the temperature by 50°C at a time until complete destruction of nitrous oxide was achieved. At a temperature of 450°C analysis of gasses exiting from the reactor confirms a high level of destruction of nitrous oxide (=1600ppm). Conversion = 98.4%. After a number of hours the catalyst showed fall off in activity which was reinstated by a regenerating treatment in H₂ at 500°C. The results reported in table 5 compare the behaviour of the catalyst before and after regeneration.

**Table 5**

| Example 15 | conversion (%) |
|---|---|
| Fresh catalyst | 98.4 |
| Deactivated catalyst | 70.8 |
| Regenerated catalyst | 98.5 |

### Tests of dilution of the catalyst with inert materials

### Example 16

The catalyst prepared in accordance with example 2 (0.3g) and pre-reduced was introduced into the tubular reactor and heated to a temperature of 350°C in a flow of nitrogen (20 l/h). Once the desired temperature had been reached the off-gas of the plant were directed to the catalyst maintaining the gas flow at 20 l/h, which corresponds to a GHSV of around 64500 h⁻¹. The conversion was monitored raising the temperature by 50°C at a time until complete destruction of nitrous oxide was achieved. At a temperature of 500°C analysis of gasses exiting from the reactor confirms practically complete destruction of nitrous oxide (<200ppm).

Conversion = 99.8%. The results reported in table 6 compare the behaviour of the catalyst as is (as described in this example) with the behaviour of same, but diluted with α-alumina. This example differs from no. 12 in respect of the presence of water in the gasses.

### Example 17

The catalyst prepared in accordance with example 2 (0.3g) and pre-reduced was mixed with 0.27 g of α-allumina, was introduced into the tubular reactor and heated to a temperature of 350°C in a flow of nitrogen (20 l/h). Once the desired temperature had been reached the off-gasses of the plant were directed to the catalyst maintaining the gas flow at 20 l/h, which corresponds to a GHSV of around 26000 h⁻¹. The conversion was monitored raising the temperature by 50°C at a time until complete destruction of nitrous oxide was achieved. At a temperature of 350°C analysis of gasses exiting from the reactor confirmed a conversion of already 94% and at 450°C the practically complete destruction of nitrous oxide (<200ppm). Conversion = 99.8%. The results reported in table 6 compare the behaviour of the catalyst as is with the behaviour of same but diluted with an equal quantity in volume of α-alumina (as described in this example).

### Example 18

The catalyst prepared in accordance with example 2 (0.3g) and pre-reduced was mixed with 0.8 g of α-alumina, introduced into the tubular reactor and heated to a temperature of 450°C in a flow of nitrogen (20 l/h). Once the desired temperature had been reached the off-gasses of the plant were directed to the catalyst maintaining the gas flow at 20 l/h, which corresponds to a GHSV of around 14000 h⁻¹. The conversion was monitored raising the temperature by 50°C at a time until complete destruction of nitrous oxide was achieved. At a temperature of 350°C analysis of gasses exiting from the reactor confirm conversion of already 96% and at 450°C practically complete destruction of nitrous oxide. Conversion 100%. The results reported in table 6 compare the behaviour of the catalyst as is with the behaviour of same, but diluted with α-alumina. for 3 times volume compared with the catalyst (as described in this example).

**Table 6**

| | **Conversions %** | | |
|---|---|---|---|
| Temperature °C | Example 16 | Example 8 | Example 18 |
| 350 | 27 | 94 | 95.5 |
| 400 | 55 | 99.5 | 99.8 |
| 450 | 96 | 99.8 | 100 |
| 500 | 99.8 | 100 | 100 |

### Duration Testing

### Example 19

The catalyst prepared in accordance with example 2 (0.3g) and pre-reduced was mixed with 0.8 g of α-alumina, introduced into the tubular reactor and heated to a temperature of 450°C in a flow of nitrogen (20 l/h). Once the desired temperature had been reached the off-gasses of the plant were directed to the catalyst maintaining the gas flow at 20 l/h, which corresponds to a GHSV of around 14000 h⁻¹. A raising of the temperature of the catalyst bed occurred which reached 520°C. The catalyst was tested for 145 hours interrupting the nitrous oxide feed during the night and then cooling the catalyst bed left in nitrogen flow. Analysis of gasses exiting from the reactor confirm practically complete destruction of nitrous oxide. Conversion 99.8%.

### Example 20

The catalyst prepared in accordance with example 2 (0.3g) and pre-reduced was mixed with 0.8 g of α-alumina, introduced into the tubular reactor and heated to a temperature of 450°C in a flow of nitrogen (20 l/h). Once the desired temperature had been reached the off-gasses of the plant were directed to the catalyst maintaining the gas flow at 20 l/h, which corresponds to a GHSV of around 14000 h⁻¹. A raising of the temperature of the catalyst bed occurred which reached 520°C. The catalyst was tested continually without causing thermal shock to the catalyst which functioned for 400 hours. Analysis of gasses exiting from the reactor confirm practically complete destruction of nitrous oxide. Conversion 99.8%.

### Example 21

The catalyst from test 20 was regenerated in current of nitrogen and hydrogen (50%) at a temperature of 750°C. After this treatment catalytic activity was completely reinstated and the catalyst functioned for a further 400 hours.

## Claims

1. A process for the catalytic decomposition of nitrous oxide in which a gaseous mixture containing nitrous oxide together with CO₂, O₂, higher oxides of nitrogen and/or H₂O is placed in contact with a catalytic system obtained by calcination and subsequent reduction with hydrogen of a hydrotalcitic structure of formula:
[Mⁿ⁺ ₐMg²⁺ _{b}Al³⁺ _{c}(OH⁻)₂]^{z+}.(A^{x-})_{z/x} m H₂O (1)
where :
M = Rh, Ru, Pt, Pd, Ir or a mixture of them
n = metal charge equal to 2, 3 or 4 depending of the nature of the metal
0<a≤0.5; 0≤b≤0.9; 0≤c≤0.5; a+b+c=1;
m= zero or a positive integer;
z = total electrical charge of.the cationic component
A = may be a hydroxyl, any inorganic or organic anion, an iso- or heteropolyanion, an anionic or organometallic complex having "x" electrical charge.

2. A process in accordance with claim 1, **characterised by** the fact that:
0.005<a≤0.02; 0.5≤b≤0,9; 0.1≤c≤0,5.

3. A process in accordance with claim 1, **characterised by** the fact that A^{x-} is CO₃²⁻.

4. A process in accordance with claim 1, **characterised by** the fact that M is Rh.

5. A process in accordance with claim 1, **characterised by** the fact that the hydrotalcitic structure in formula (1) is:
[Rh³⁺ _{0.01}Mg²⁺ _{0,71}Al³⁺ _{0,28}(OH⁻)₂)]^{z+}(CO₃²⁻)_{z/2} m H₂O (1bis)
where m and z have the meanings indicated previously.

6. A process in accordance with claim 1 **characterised by** the fact that calcination is carried out at a temperature within the range of 350 to 750°C, preferably of from 500 to 700°C.

7. A process in accordance with claim 1 **characterised by** the fact that reduction is carried out at a temperature within the range of 350 to 1000°C, preferably from 500-800°C.

8. A process in accordance with claim 1 **characterised by** the fact that reduction is carried out at a pressure within the range of 0,5 to 30 atm, preferably from 1 to 5 atm.

9. A process in accordance with claim 1 **characterised by** the fact that reduction is carried out for a period of time between 0.2 and 24 hours, preferably between 1 to 10 hours.

10. A process in accordance with claim 1 **characterised by** the fact that decomposition is carried out placing the calcined and reduced structure into contact with a gaseous mixture containing from 10 to 40% of nitrous oxide.

11. A process in accordance with claim 1, **characterised by** the fact that said gaseous mixture is not subjected to any prior dilution treatment.

12. A process in accordance with claim 1, **characterised by** the fact that said gaseous mixture is a waste gas from the production of adipic acid.

13. A process in accordance with claim 1, **characterised by** the fact that the concentration of N₂O is reduced to levels below 500 ppm, preferably to levels below 200 ppm.

14. A process in accordance with claim 1, **characterised by** being carried out at a temperature ranging from 100 to 900°C, preferably from 300 to 600°C.

15. A process in accordance with claim 1, **characterised by** being carried out at a pressure ranging from 0.1 to 100 atm, preferably from 0.1 to 10 atm.

16. A process in accordance with claim 1, **characterised by** the fact that said catalytic system is mixed with mixed oxides obtained from hydrotalcites, α-alumina or silicon carbide.

17. A process of regeneration of the catalytic system used in a process in accordance with claim 1, **characterised by** the fact that said catalytic system is placed in contact with a mixture of hydrogen and nitrogen or helium containing hydrogen in quantities ranging from 0.5 to 100%, preferably from 1 to 50%.

18. A process in accordance with claim 17, **characterised by** being carried out for a period of time between 0.2 and 24 h, preferably between 1 and 10 h.

19. A process in accordance with claim 17, **characterised by** being carried out at a temperature ranging from 100 to 900°C, preferably from 300 to 800°C.

20. A process in accordance with claim 17, **characterised by** being carried out at a pressure ranging from 0.5 to 30 atm, preferably from 1 to 5 atm.

## Patentansprüche

1. Ein Verfahren zur kätalytischen Zerlegung von Distickstoffmonoxid (N₂O), bei dem ein Gasgemisch bestehend aus Distickstoffmonoxid, CO₂, O₂, höherwertigen Stickstoffoxiden und/oder H₂O mit einem katalytischen System von einer Hydrotalcit-Struktur mit folgender Formel:
[Mⁿ⁺ ₐ Mg²⁺ _{b} Al³⁺ _{c} (OH⁻)₂]^{z+} (A^{x-})_{z/x} m H₂O (1)
in Verbindung gebracht wird, welches wiederum durch Kalzinierung und anschließende Reduktion mit Wasserstoff hergestellt wird.
Wo:
M = Rh, Ru, Pt, Pd, Ir oder ein Gemisch aus diesen
n = Metalladung gleich 2, 3 oder 4 je nach der Art des Metalles
0<a 0.5; 0 b 0.9; 0 c 0.5; a+b+c=1;
m = null oder eine positive ganze Zahl;
z = gesamte elektrische Ladung der Kationenkomponente
A = kann ein Hydroxyl,jedes anorganisches oder organisches Anion, ein Iso- oder Heteropolyanion, ein Anion- oder organometallischer Komplex mit elektrischer Ladung "X" sein.

2. Verfahren gemäß Anspruch 1, **gekennzeichnet durch**:
0.005 < a 0.02; 0.5 b 0.9; 0.1 c 0.5.

3. Verfahren gemäß Anspruch 1, **dadurch gekennzeichnet, dass** A^{x-} ist CO₃²⁻.

4. Verfahren gemäß Anspruch 1, **dadurch gekennzeichnet, dass** M ist Rh.

5. Verfahren gemäß Anspruch 1, **dadurch gekennzeichnet, dass** die Hydrotalcit-Struktur der Formel entspricht:
[Rh³⁺ _{0.01}Mg²⁺ _{0.71}Al³⁺ _{0.28}(OH⁻)₂]^{z+}(CO₃²⁻)_{z/2}m H₂O (1bis)
wo m und z die vorher angegebene Bedeutung haben.

6. Verfahren gemäß Anspruch 1, **dadurch gekennzeichnet, dass** die Kalzinierung bei einer Temperatur zwischen 350 und 750° C, bevorzugt zwischen 500 und 700 °C, durchgeführt wird.

7. Verfahren gemäß Anspruch 1, **dadurch gekennzeichnet, dass** die Reduktion bei einer Temperatur zwischen 350 und 1000° C, bevorzugt zwischen 500 und 800° C, durchgeführt wird.

8. Verfahren gemäß Anspruch 1, **dadurch gekennzeichnet, dass** die Reduktion mit einem Druck zwischen 0,5 und 30 atm, bevorzugt zwischen 1 und 5, durchgeführt wird.

9. Verfahren gemäß Anspruch 1, **dadurch gekennzeichnet, dass** die Reduktion in einem Zeitraum von 0,2 bis 24 Stunden, bevorzugt von 1 bis 10 Stunden, durchgeführt wird.

10. Verfahren gemäß Anspruch 1, **dadurch gekennzeichnet, dass** die Zersetzung erfolgt, indem die kalzinierte und reduzierte Struktur mit einem Gasgemisch in Verbindung gebracht wird, dass 10 bis 40% Distickstoffmonoxid enthält.

11. Verfahren gemäß Anspruch 1, **dadurch gekennzeichnet, dass** das obengenannte Gasgemisch zuvor nicht verdünnt wurde.

12. Verfahren gemäß Anspruch 1, **dadurch gekennzeichnet, dass** das obengenannte Gasgemisch als Abfallprodukt bei der Herstellung von Adipinsäure anfällt.

13. Verfahren gemäß Anspruch 1, **dadurch gekennzeichnet, dass** die Konzentration von N₂O auf weniger als 500 ppm, besser noch auf weniger als 200 ppm verringert wird.

14. Verfahren gemäß Anspruch 1, **dadurch gekennzeichnet, dass** es bei einer Temperatur zwischen 100 bis 900° C, bevorzugt zwischen 300 und 600° C, durchgeführt wird.

15. Verfahren gemäß Anspruch 1, **dadurch gekennzeichnet, dass** es mit einem Druck zwischen 0,1 bis 100 atm, bevorzugt zwischen 0,1 und 10 atm, durchgeführt wird.

16. Verfahren gemäß Anspruch 1, **dadurch gekennzeichnet, dass** das obengenannte katalytische System mit einem Oxidgemisch gemischt wird, das wiederum aus Hydrotalcit, ∝-Aluminiumoxid oder Silikon-Karbid hergestellt wurde.

17. Ein Regenerationsverfahren des katalytischen Systems benutzt in dem Verfahren gemäß Anspruch 1, **dadurch gekennzeichnet, dass** das obengenannte katalytische System mit einer Wasserstoff- und Stickstoff- oder Heliumgemisch in Verbindung gebracht wird, das eine Wasserstoffmenge von 0,5 bis 100% enthält, bevorzugt von 1 bis 50%.

18. Verfahren gemäß Anspruch 17, **dadurch gekennzeichnet, dass** es in einer Zeitspanne von 0,2 bis 24 Stunden, bevorzugt von 1 bis 10 Stunden, durchgeführt wird.

19. Verfahren gemäß Anspruch 17, **dadurch gekennzeichnet, dass** es bei einer Temperatur zwischen 100 bis 900° C, bevorzugt zwischen 300 und 800° C, durchgeführt wird.

20. Verfahren gemäß Anspruch 17, **dadurch gekennzeichnet, dass** es mit einem Druck zwischen 0,5 und 30 atm, bevorzugt zwischen 1 und 5 atm, durchgeführt wird.

## Revendications

1. Procédé pour la décomposition catalytique du protoxyde d'azote dans lequel un mélange des gaz contenant protoxyde d'azote, du CO₂, de l'O₂, des oxydes d'azote (NOₓ) et/ou de l'H₂O, est mis en contact avec un système catalytique obtenu par calcination et par une réduction successive avec hydrogène ayant une structure hydrotalcique:
[Mⁿ⁺ ₐ Mg²⁺ _{b}Al³⁺ _{c}(OH⁻)₂]^{z+} (A^{x-})_{z/x} m H₂O (1)
où:
M = Rh, Ru, Pt, Pd, Ir ou un de leur mélange.
n = charge métallique égale à 2, 3 ou 4 selon la nature du métal.
0<a 0.5; 0 b 0.9; 0 c 0.5; a+b+c=1;
m = zéro ou nombre entier positif ;
z = charge électrique totale du composant cationique.
A = peut être un hydroxyle, n'importe quel anion organique ou inorganique, un iso- ou hétéropolyanion, un complexe anionique ou organométallique ayant une charge électrique « x ».

2. Procédé selon la revendication 1, **caractérisé par le fait que**:
0.005 < a 0.02; 0.5 b 0.9; 0.1 c 0.5.

3. Procédé selon la revendication 1, **caractérisé par le fait que** A^{x-} est CO₃²⁻.

4. Procédé selon la revendication 1, **caractérisé par le fait que** M est Rh.

5. Procédé selon la revendication 1, **caractérisé par le fait que** la structure hydrotalcique dans la formule (1) est :
[Rh³⁺ _{0.01}Mg²⁺ _{0.71}Al³⁺ _{0.28}(OH⁻)₂]^{z+}(CO₃²⁻)_{z/2} m H₂O (1bis)
où m et z ont le même sens mentionnés ci - dessus

6. Procédé selon la revendication 1, **caractérisé par le fait que** la calcination est effectuée à une température comprise entre 350 et 750 °C, de préférence de 500 à 800 °C.

7. Procédé selon la revendication 1, **caractérisé par le fait que** la réduction est effectuée à une température comprise entre 350 et 1000 °C, de préférence de 500 à 800 °C.

8. Procédé selon la revendication 1, **caractérisé par le fait que** la réduction est effectuée à une pression comprise entre 0,5 et 30 atm, de préférence de 1 à 5 atm.

9. Procédé selon la revendication 1, **caractérisé par le fait que** la réduction est effectuée pour une période de temps comprise entre 0.2 et 24 h, de préférence de 1 à 10 h.

10. Procédé selon la revendication 1, **caractérisé par le fait que** la décomposition est effectuée en mettant la structure calcinée et réduite en contact avec un mélange gazeux comprenant de 10 à 40% de protoxyde d'azote.

11. Procédé selon la revendication 1, **caractérisé par le fait que** le mélange gazeux en question n'est pas soumis à un traitement de dilution précédent.

12. Procédé selon la revendication 1, **caractérisé par le fait que** le mélange gazeux en question est un gaz déchet provenant de la production d'acide adipique.

13. Procédé selon la revendication 1, **caractérisé par le fait que** la concentration de N₂O est réduite à des niveaux en dessous 500 ppm, de préférence en dessous 200 ppm.

14. Procédé selon la revendication 1, **caractérisé par le fait qu'**il est effectué à une température comprise entre 100 et 900 °C, de préférence de 300 à 600 °C.

15. Procédé selon la revendication 1, **caractérisé par le fait qu'**il est effectué à une pression comprise entre 0,1 et 100 atm, de préférence de 0,1 à 10 atm.

16. Procédé selon la revendication 1, **caractérisé par le fait que** le système catalytique en question est mêlé à des oxydes mélangés obtenus à partir d'hydrotalcites, d'α-alumine ou de carbure de silicium.

17. Procédé de régénération du système catalytique utilisé selon la revendication 1, **caractérisé par le fait que** le système catalytique en question est mis en contact avec un mélange d'hydrogène et d'azote ou d'hélium ayant quantité d'hydrogène comprise de 0,5 et 100%, de préférence de 1 à 50%.

18. Procédé selon la revendication 17, **caractérisé par le fait qu'**il est effectué pour une période de temps compris entre 0.2 et 24 h, de préférence de 1 à 10 h.

19. Procédé selon la revendication 17, **caractérisé par le fait qu'**il est effectué à une température comprise entre 100 et 900 °C, de préférence de 300 à 800 °C.

20. Procédé selon la revendication 17, **caractérisé par le fait qu'**il est effectué à une pression comprise entre 0.5 et 30 atm, de préférence de 1 à 5 atm.
